# EUROPÄISCHE PATENTANMELDUNG

(11) **EP 2 071 300 A2**
(43) Veröffentlichungstag der Anmeldung: **17.06.2009**
(21) Anmeldenummer: 08105795.2
(22) Anmeldetag: 14.11.2008
(51) Int. Cl.: G01F 23/24, G01F 23/26

(54) **Tank mit elektrischen Elemente welche zumindest teilweise mit einem Elastomer bedeckt sind**

(30) Priorität: 12.12.2007 DE 102007059848
(71) Anmelder: Robert Bosch GmbH, 70442 Stuttgart (DE)
(72) Erfinder: Haeberer, Rainer, 75015, Bretten (DE); Bruns, Joachim, 73669, Lichtenwald (DE)

(57) **Zusammenfassung**

Es wird eine elektrische Anordnung zur Einbringung in einen eine Flüssigkeit (11), insbesondere ein Reduktionsmittel zur Entstickung von Abgasen einer Brennkraftmaschine, enthaltenden Tank (1), mit mindestens einem über mindestens eine elektrische Leitung (29) mit Elektrizität beaufschlagbaren Element zur Messung bzw. Beeinflussung einer Zustandsgröße der Flüssigkeit vorgeschlagen, wobei das Element zumindest teilweise mit einer einen Kunststoff aufweisenden Beschichtung (35) bedeckt und zum zumindest teilweisen Eintauchen in die Flüssigkeit (11) eingerichtet ist und wobei der Kunststoff ein Elastomer ist.

## Beschreibung

### Stand der Technik

Die Erfindung geht aus von einer elektrischen Anordnung bzw. einem Verfahren zur Herstellung einer elektrischen Anordnung nach der Gattung der unabhängigen Ansprüche.

Aus der WO 03/052357 ist bereits eine Vorrichtung zum Bestimmen des Füllstands einer Flüssigkeit in einem Behälter bekannt, bei der eine Messelektrodenanordnung mit einer elektrisch nicht leitenden Isolierung überzogen ist.

### Offenbarung der Erfindung

Die erfindungsgemäße elektrische Anordnung bzw. das Verfahren zur Herstellung einer solchen Anordnung mit den kennzeichnenden Merkmalen der unabhängigen Ansprüche haben demgegenüber den Vorteil, die Bereitstellung einer gegenüber chemisch aggressiven, flüssigen, mediendichten und resistenten Anordnung bereitzustellen, die in vorteilhafter Weise eine in einem einzigen Umspritzungsvorgang herstellbare robuste Beschichtung aufweist.

Durch die in den abhängigen Ansprüchen aufgeführten Maßnahmen sind vorteilhafte Weiterbildungen und Verbesserungen der in den unabhängigen Ansprüchen angegebenen Anordnung bzw. des angegebenen Verfahrens möglich. Besonders vorteilhaft ist es, die Beschichtung zumindest teilweise auf die elektrische Leitung zu erstrecken, insbesondere in einem Übergangsbereich der elektrischen Leitung zum Element. Hierdurch wird eine robuste und gleichzeitig flexible Abdichtung des Elements, insbesondere in seinem Übergangsbereich zur elektrischen Leitung bzw. im Bereich seines elektrischen Anschlusses, gewährleistet. Hierbei kann diese Abdichtung in vorteilhafter Weise durch einen einzigen Umspritzungsvorgang des Elements und zumindest Teilen der elektrischen Leitung beispielsweise mit Ethylen-Propylen-Dien-Kautschuk bereitgestellt werden.

Darüber hinaus kann in vorteilhafter Weise die elastische Eigenschaft des verwendeten Kunststoffs zur zusätzlichen Abdichtung der elektrischen Anschlussbereiche des Elements genutzt werden, indem im Bereich des Übergangs vom Element zur elektrischen Leitung die Beschichtung mit einem Spannelement beaufschlagt wird.

Die Anordnung kann hierbei in vorteilhafter Weise als Füllstandssensoranordnung bzw. als Temperatursensoranordnung bzw. als Heizungsanordnung ausgebildet sein.

In einer weiteren vorteilhaften Ausführungsform können hierbei elektrische Schaltungselemente direkt im Bereich des Sensors, der in die aggressive Flüssigkeit eintaucht, integriert sein.

Aus den in den weiteren abhängigen Ansprüchen und der Beschreibung genannten Merkmalen ergeben sich weitere Vorteile.

### Kurze Beschreibung der Zeichnungen

Ausführungsbeispiele der Erfindung sind in der Zeichnung dargestellt und in der nachfolgenden Beschreibung näher erläutert. Es zeigen Figur 1 eine Tankanordnung, Figur 2 ein Heizelement mit Thermoplast-Beschichtung, Figur 3 ein Heizelement mit Elastomer-Beschichtung, Figur 4 die elektrische Kontaktierung eines Heizelements, Figur 5 eine alternative Ausführungsform einer elektrischen Kontaktierung, Figur 6 eine weitere alternative Ausführung einer elektrischen Kontaktierung, Figur 7 eine Füllstandssensoranordnung, Figur 8 eine weitere Füllstandssensoranordnung, Figur 9 eine dritte Füllstandssensoranordnung und Figur 10 eine Füllstandssensoranordnung mit integriertem Temperaturmesswertgeber.

### Ausführungsformen der Erfindung

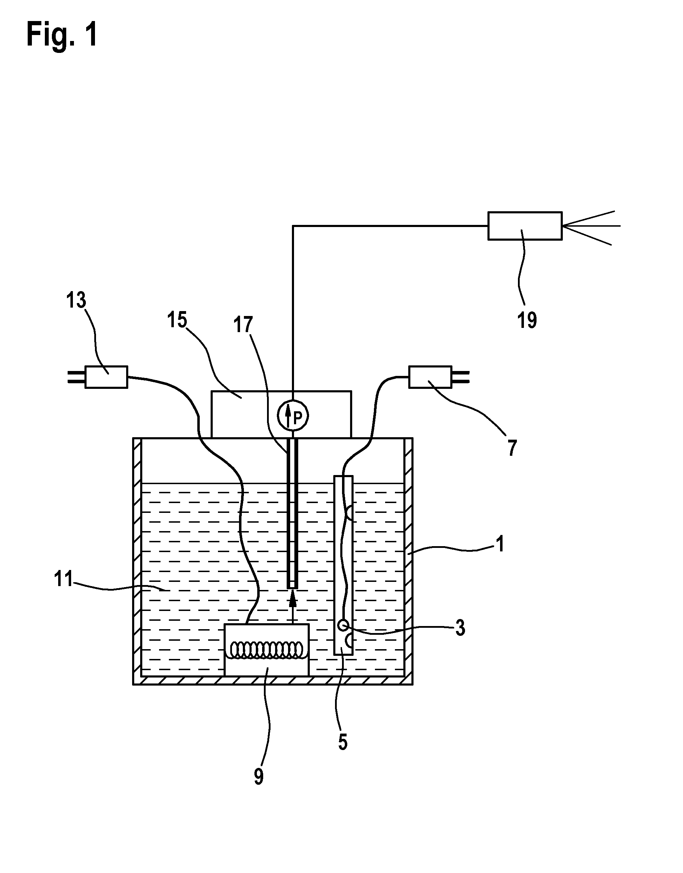

Figur 1 zeigt eine Tankanordnung mit einem Tank 1 zur Bevorratung einer wässrigen Harnstofflösung, die zur Entstickung von Abgasen einer Brennkraftmaschine eingesetzt wird. Bei Fahrzeugen mit Verbrennungsmotor muss aufgrund der in den nächsten Jahren anstehenden verschärften Abgasgesetzgebung unter anderem der Schadstoff Stickoxid reduziert werden. Eine Methode, die zur Anwendung kommt, ist das Verfahren der selektiven katalytischen Reduktion ("SCR"-Verfahren; "SCR"= = "selektive catalytic reduction"). Bei diesem Verfahren werden Stickoxide unter Zuhilfenahme flüssiger Reduktionsmittel zu Stickstoff und Wasser reduziert. Das flüssige Reduktionsmittel, insbesondere eine wässrige Harnstofflösung 11, auch "AdBlue" genannt, wird in einem Tank gelagert und über eine Leitung zu einem beispielsweise als elektrisch schaltbares Ventil ausgeführtem Dosiermodul 19 gefördert. Das System arbeitet mit einem vorgegebenen Systemdruck, der über eine in einem Fördermodul 15 enthaltene Pumpe, einen nicht näher dargestellten Drucksensor und einem mit einer nicht näher dargestellten Drossel versehenen Rücklauf zum Tank realisiert wird. Der Tank enthält ein Heizelement 9, einen Füllstandsmesswertgeber 5, einen Temperaturmesswertgeber 3 und gegebenenfalls einen nicht näher dargestellten Qualitätssensor für das Reduktionsmittel. Das Fördermodul 15 saugt hierbei mittels eines Saugrohrs 17 aus einem Bereich nahe des Heizelements 9 die Flüssigkeit ab und befördert sie zum Dosiermodul 19, das das Reduktionsmittel in den Abgastrakt einspritzt. Die Sensorik sowie das Heizelement können über elektrische Leitungen und Stecker 7 bzw. 13 mit elektrischer Energie bzw. Messspannungen bzw. Strömen beaufschlagt werden. In der Tankanordnung nach Figur 1 sind Temperatursensor 3 und Füllstandssensor 5 innerhalb einer elektrischen Anordnung integriert.

Das Reduktionsmittel AdBlue hat eine ausgeprägte Kriechneigung. Diese Kriechneigung in Verbindung mit seiner korrosiven Eigenschaft stellt hohe Anforderungen an im Reduktionsmittel positionierte Komponenten wie die in Figur 1 abgebildete elektrische Heizung 9, den Füllstandssensor 5, den Temperatursensor 3 und gegebenenfalls weitere, nicht näher dargestellte Aktoren, insbesondere hinsichtlich Dichtheit. Eine mögliche Umspritzung mit Thermoplasten solcher Komponenten wird produktionstechnisch mittels einer Primär- und einer nachfolgenden Sekundärumspritzung realisiert. Da zwischen der Primär- und der Sekundärumspritzung nur sehr schwer eine chemische Verbindung und somit die Dichtheit realisiert werden kann, ist es aufwändig, die Umspritzungen so aufeinander abzustimmen, dass das korrosive Medium nicht in Folge einer Kapillarwirkung durch etwaige Spalte in die Komponenten eindringen und somit die Komponenten schädigen kann. Besonders hoch wird ein solcher Aufwand bei Sensoren, bei denen eine Auswerteeinheit im Sensor positioniert ist, wie es beispielsweise bei kapazitiven Sensoren der Fall ist. Auch kann zwischen Metall und üblichen Thermoplasten (PA66) aufgrund unterschiedlicher Ausdehnungskoeffizienten nur mit großem Aufwand eine dichte Verbindung realisiert werden. Eine besonders kritische Anwendung sind Füllstandssensoren, die auf der Messung der elektrischen Leitfähigkeit des Reduktionsmittels basieren. Bei diesem Messprinzip wird über metallische Kontakte, die sich in unterschiedlichen Höhen im AdBlue befinden, der Füllstand detektiert. Diese metallischen Stifte müssen gegenüber dem Sensorinneren abgedichtet sein. Der Kabelabgang aus der Komponente stellt, falls sich dieser im Reduktionsmittel befindet, ebenfalls eine große Herausforderung an die Dichtheit dar, insbesondere da die für die Umspritzung der Komponente verwendbaren Thermoplaste und die gängigen AdBluetauglichen Kabelummantelungen keine chemische Verbindung miteinander eingehen.

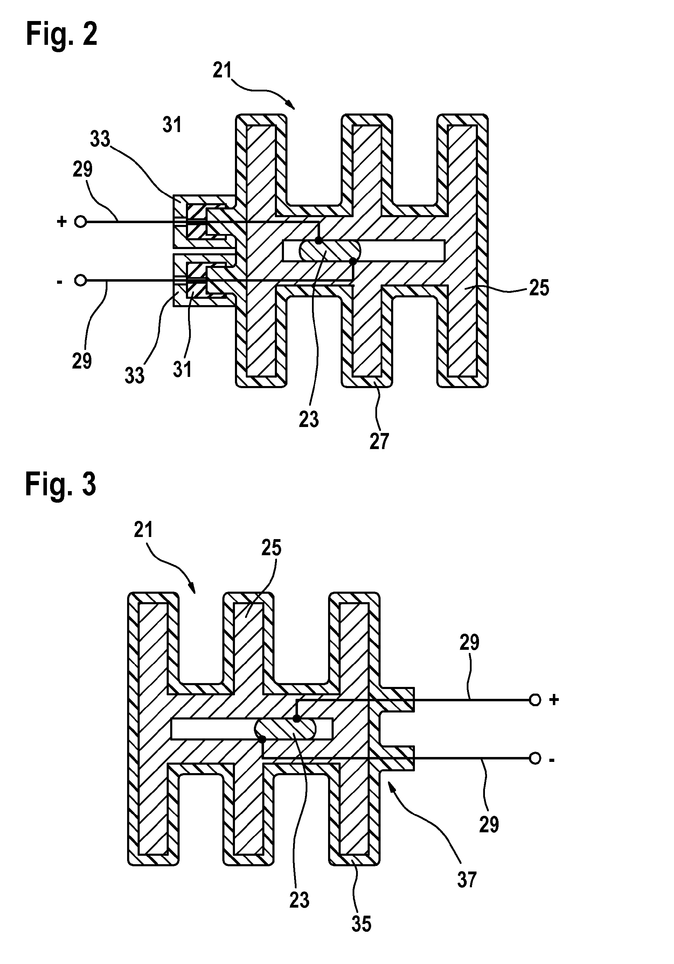

Figur 2 zeigt eine in einen Tank einbringbare elektrische Anordnung 21 mit einem Heizelement 23, 25. Das Heizelement weist einen Heizungswiderstand 23 mit positivem Temparaturkoeffizienten auf. Der Heizungswiderstand ist hierbei von einem gerippten Aluminiumkörper 25 umgeben, der seinerseits allseitig mit einer Beschichtung 27 aus einem Thermoplast, beispielsweise Polyethylen, versehen ist. Das PTC-Element 23 wird über eine elektrische Leitung 29 kontaktiert, an die eine elektrische Heizspannung angeschlossen werden kann. Die elektrischen Leitungen 29 sind in einem Bereich nahe des gerippten Aluminiumkörpers 25 wie dieser mit einer Thermoplast-Beschichtung versehen. Über diesen Beschichtungsbereich ist ein Elastomerring 31 übergestülpt, der seinerseits mittels eines Spannelements 33 fixiert ist.

Die Erfindung geht nun davon aus, dass die im AdBlue befindlichen Komponenten nicht mit einem Thermoplast, sondern mit einem Elastomer umspritzt sind. Figur 3 zeigt eine solche elektrische Anordnung mit Heizelement 23, 25, das eine Beschichtung 35 aus einem Elastomer aufweist. Als Elastomer wird hierbei ein Kautschuk, insbesondere ein Ethylen-Propylen-Dien-Kautschuk (kurz: EPDM), verwendet. EPDM führt mit seiner gesättigten Gerüststruktur zu Eigenschaften wie hoher Feuchtigkeitsbeständigkeit und hoher thermischer Beständigkeit. Er weist darüber hinaus eine hohe Elastizität und eine gute chemische Beständigkeit auf. Elastomere, insbesondere EPDM, können nicht nur auf Körper aus Aluminium, sondern auch auf Stähle dicht aufvulkanisiert werden, wodurch eine ausgezeichnete Dichtheit zwischen Metall und Elastomer gewährleistet werden kann. Die Elastomerumspritzung hat somit den Vorteil, dass die einzuspritzenden Metallteile gegen das Elastomer abdichten, d. h. beim Umspritzen können die Metallteile gehalten werden. Es ist keine Sekundärumspritzung zum Verschließen dieser Haltepunkte erforderlich. Somit ist nicht unbedingt eine komplett geschlossene Umspritzung erforderlich, soweit bestimmte Bauteile oder Bauteilbereiche grundsätzlich gegen die Harnstoffwasserlösung resistent sind und lediglich eine gute Abdichtung weiter im Inneren befindlicher Komponenten, wie beispielsweise im vorliegenden Fall eines PTC-Heizungswiderstands 23, erforderlich ist. Aufgrund der Elastizität hat das Elastomer auch die Fähigkeit, die unterschiedlichen Wärmeausdehnungskoeffizienten von Stahl und Elastomer aufzunehmen. Im Bereich des Kabelabgangs, also im Übergangsbereich 37, weist die Anordnung nach Figur 3 ebenfalls eine Elastomerbeschichtung auf, sodass eine dichte Umspritzung bzw. Kabelummantelung im Bereich des Kabelaustritts gewährleistet wird. Aufgrund der guten Elastizität des Elastomers kann in diesem Fall auch zusätzlich oder alternativ eine kraftschlüssige Verbindung über eine zusätzliche Klammer verwirklicht werden.

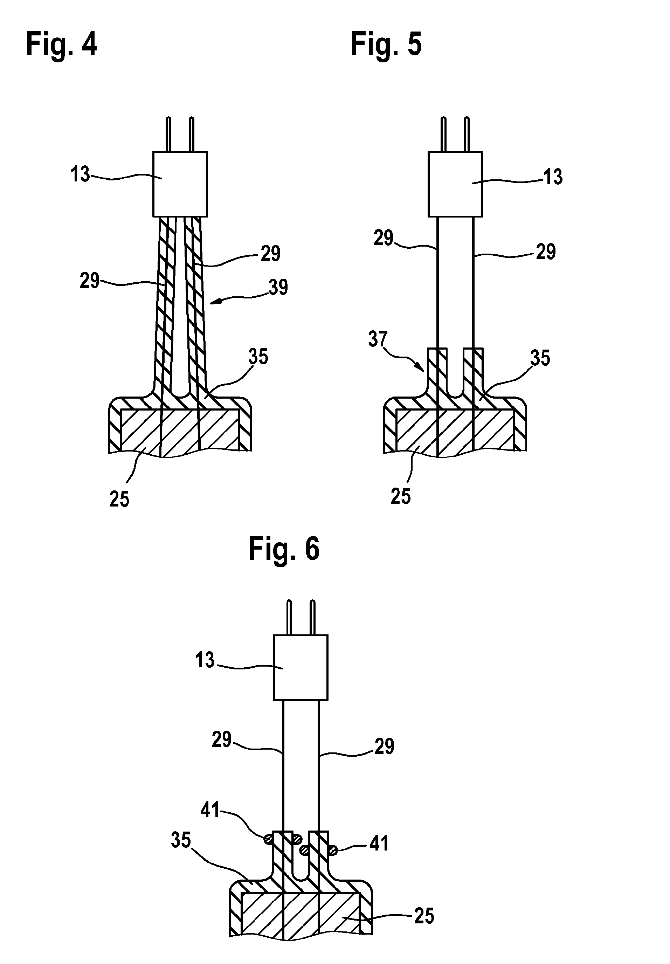

Figur 4 zeigt einen Kontaktierungsbereich einer elektrischen Anordnung gemäß Figur 3 mit einem elektrischen Stecker 13, der an die elektrischen Leitungen 29 angeschlossen ist. Der Übergangsbereich 39, also der Bereich, in dem die elektrischen Leitungen 29 ebenso wie der gerippte Aluminiumkörper 25 mit einem Elastomer einstückig beschichtet sind, reicht im dargestellten Ausführungsbeispiel bis zum Stecker 13.

Figur 5 zeigt eine alternative Ausführungsform eines Übergangsbereichs, bei dem dieser mit 37 bezeichnete Bereich sich, ausgehend vom gerippten Aluminiumkörper 25, mindestens 30 mm über das ummantelte Litzenkabel erstreckt, jedoch im weiteren Verlauf zum Stecker 13 hin die Leitungen 29 lediglich noch durch die stets vorgesehene Standardummantelung des Litzenkabels geschützt sind. Zwischen der Ummantelung des Litzenkabels, die in der Figur nicht näher dargestellt ist und dem Elastomer entsteht eine dichte Verbindung, die im Übergangsbereich 37 zuverlässig ein Eindringen eines chemisch aggressiven Mediums in das Innere des Heizelements 23, 25 unterbindet.

Figur 6 zeigt eine Ausführungsform eines Übergangsbereichs, der ähnlich wie in Figur 5 dargestellt ausgeführt ist, jedoch im Bereich der 30 mm langen Elastomerumspritzung eine zusätzliche kraftschlüssige Quetschung über Spannelemente 41 aufweist.

Die gemäß Figur 3 bis 6 dargestellten elektrischen Anordnungen können alternativ auch als Temperaturmesswertgeber ausgeführt werden, beispielsweise, indem an Stelle eines PTC-Elements 23 ein Widerstand mit negativem Temperaturkoeffizienten verwendet wird.

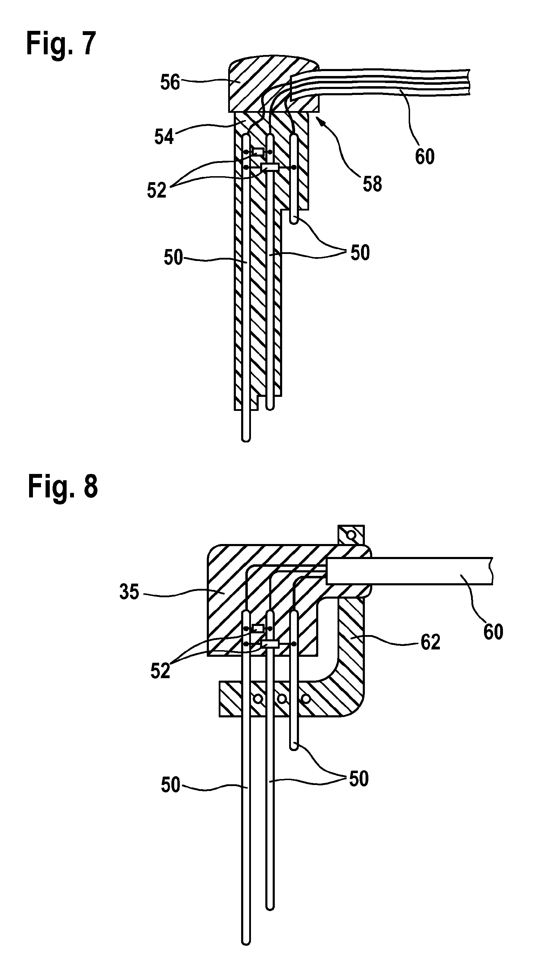

Figur 7 zeigt eine als Füllstandssensor ausgeführte elektrische Anordnung, bei der Metallstifte 50 parallel zueinander angeordnet sind. Diese weisen unterschiedliche Längen aus und ragen bei senkrechter Anbringung im Tank unterschiedlich tief in das Reduktionsmittel ein. Die an den Metallstiften relativ zu einem Referenzstift, dem längsten Stift, gemessene Leitfähigkeit wird jeweils über eine Litze an eine nicht näher dargestellte Auswerteschaltung übermittelt. Diese Übermittlung erfolgt gebündelt über das Kabel 60. Aus Gründen der On-Board-Diagnose-(OBD-)Überwachung des Sensors sind die Stifte am oberen Ende über definierte Schaltungselemente (elektrische Widerstände) 52 zum Referenzstift geschaltet. Somit kann beispielsweise ein Bruch des Kabels 60 diagnostiziert werden. Die Anordnung gemäß Figur 7 ist mit einer Thermoplastprimärumspritzung 54 versehen, die kopfseitig, also auf der Seite des angeschlossenen Kabels 60, mit einer Sekundärumspritzung 56 abgedeckt ist, um einen flüssigkeitsdichten Übergang vom Bereich der Metallstifte 50 zum Kabel 60 zu gewährleisten.

Dabei bildet sich eine Naht 58 aus, die für ein Unterwandern durch chemisch aggressive Medien, insbesondere für das Unterwandern durch eine wässrige Harnstofflösung, empfänglich ist.

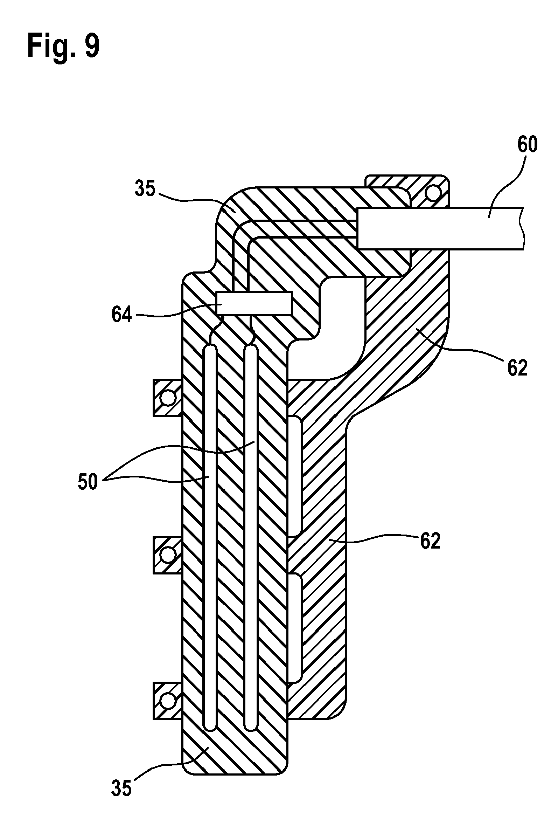

Daher wird gemäß Figur 8 vorgeschlagen, sowohl die Metallstifte 50 im Bereich der elektrischen Ankopplung der Anschlusslitzen als auch die Ankopplung der OBD-Widerstände 52 sowie einen sensornahen Bereich des Kabels 60 mit einem Elastomer zu umspritzen. Zwischen dem Stahl der Metallstifte 50 und dem Elastomer kann durch ein Aufvulkanisieren eine sichere Dichtheit dargestellt werden. Die Elastomerumspritzung 35 kann sich entlang des Kabels 60, ähnlich wie in den Figuren 4 bis 6 dargestellt, bis zu einem Stecker erstrecken oder kürzer ausgeführt sein und wahlweise im Übergangsbereich zwischen Kabel und Sensorkopf mit einem Spannelement zusätzlich abgesichert sein. Zur mechanischen Stabilisierung des Sensors kann nach dem Aufspritzen bzw. Aufvulkanisieren des EPDM wahlweise zusätzlich ein Stützelement 62 in Form eines Kunststoffkorsetts aufgeknüpft werden. Figur 9 zeigt eine elektrische Anordnung in Form eines auf einem kapazitiven Messprinzip beruhenden Füllstandssensors, bei dem die Messstifte 50 im Unterschied zu den Anordnungen gemäß Figur 7 und 8 vollständig von einer Elastomerbeschichtung 35 umgeben sind. Die Auswerteelektronik ist in einer Auswertebox 64 angeordnet, die als Umhüllung dient und die unmittelbar bei den Messstiften positioniert ist. Die Auswertebox 64 ist ebenso wie die Metallstifte 50 komplett nahtlos mit EPDM umspritzt. Auch hier kann ein Kunststoffkorsett 62 vorgesehen und der Kabelabgang analog zu den Darstellungen gemäß Figur 4 bis 6 ausgeführt sein. Das Kunststoffkorsett 62 kann hierbei als aufsteckbares Bauteil ausgeführt sein, das durch entsprechende Dimensionierung der aufzusteckenden Partien stramm auf der Elastomerbeschichtung 35 und auf dem Kabel 60 aufsitzt und so der gesamten Füllstandssensoranordnung Stabilität verleiht. Eine Alternative wäre, die Messstifte komplett mit einem Thermoplast zu umspritzen und diese Umspritzung oberhalb der Stifte mit der beschriebenen Auswertebox enden zu lassen, in die die Auswerteelektronik integriert ist. In dieser alternativen Ausführungsform würde die Box mit einem Thermoplastdeckel geschlossen und die Abdichtung zwischen Deckel und Sensorkörper könnte über ein Elastomerelement oder über Verschweißen realisiert werden. Diese Box stellt allerdings große Ansprüche an die Dichtheit, da sie ein Luftvolumen beinhaltet, welches bei Temperaturwechsel Unter- bzw. Überdrücken unterworfen wird. Die dichte Umspritzung des den Sensor verlassenden Kabels mittels Thermoplast ist wie bei der Heizung, die in den Figuren 2 bis 6 beschrieben wurde, ebenfalls sehr kritisch. Daher stellt die Verwendung eines Elastomers, wie in Figur 9 dargestellt, das einstückig sowohl Messstifte als auch Auswertebox als auch einen Übergangsbereich zum Kabel 60 hin vollständig umgibt, eine Neuerung dar, die in einfacher und robuster Weise eine Abdichtung gegen korrosive Medien auch bei Integration komplexer Schaltungstechnik im Sensorkopf gewährleistet.

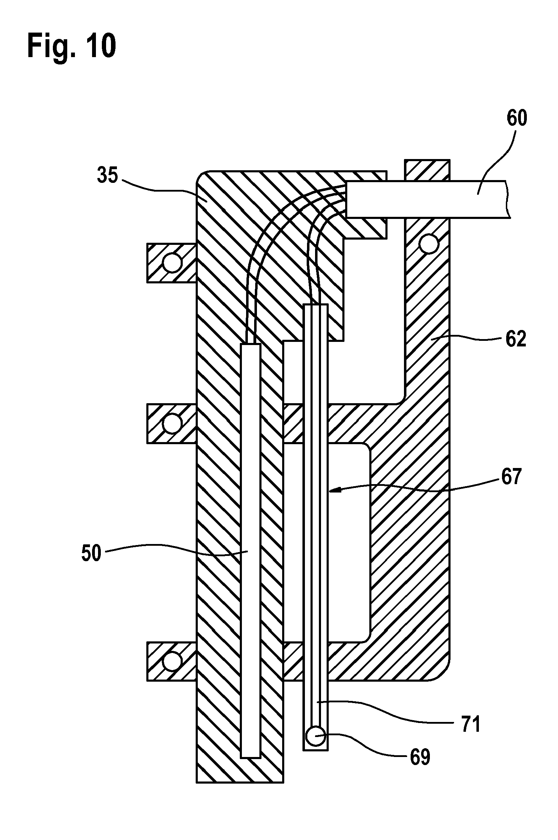

Figur 10 zeigt eine elektrische Anordnung, die als Füllstandssensor mit integriertem Temperaturmesswertgeber 67 ausgeführt ist. Der Teil des Sensors, der zur Füllstandsmessung dient, ist lediglich schematisch mit einem Metallstift 50 dargestellt. Der Temperaturmesswertgeber 67 misst mittels des Sensorkopfs 69, in dem sich ein temperaturempfindliches Element befindet, zweckmäßigerweise die Temperatur im Tank am tiefsten Punkt des Füllstandssensors. Der Temperaturmesswertgeber 67 weist ein Metallrohr 71 auf, das auf der Seite des temperaturempfindlichen Elements 69 flüssigkeitsdicht abgeschlossen ist. Das Metallrohr schützt die vom Kabel 60 zum temperaturempfindlichen Element 69 führenden elektrischen Leitungen vor der im Tank befindlichen Flüssigkeit. Auch hier könnte man wieder den NTC-Widerstand 69 zusammen mit dem Füllstandssensor mit einem Thermoplast umspritzen. Die bei dieser Umspritzung zwischen Primär- und Sekundärumspritzung auftretenden Bindenähte können auch hier allerdings undicht werden und somit das Messergebnis des Temperatursensors verfälschen. Auch hier bietet eine Elastomerumspritzung 35, wie in Figur 10 dargestellt, eine vorteilhafte Lösung an. Das NTC-Element befindet sich, wie bereits ausgeführt, in dem einseitig geschlossenen Metallrohr, das auf der dem NTC-Element abgewandten Seite in die Elastomerumspritzung mit eingespritzt ist. Eine mechanische Stabilisierung des Metallrohrs 71 wiederum kann parallel zu einer mechanischen Stabilisierung des Füllstandssensors über das aufklemmbare Kunststoffelement 64 erfolgen.

Die Erfindung umfasst in den beispielhaft dargestellten Ausführungsvarianten eine elektrische Anordnung zur Einbringung in einen eine Flüssigkeit enthaltenden Tank, mit mindestens einem über mindestens eine elektrische Leitung mit Elektrizität beaufschlagbaren Element zur Messung bzw. Beeinflussung einer Zustandsgröße der Flüssigkeit. Als Zustandsgröße kommen hier insbesondere der Füllstand der Flüssigkeit im Tank und/oder die Temperatur der Flüssigkeit im Tank in Betracht. Eine Beeinflussung der Temperatur der Flüssigkeit im Tank kann beispielsweise durch ein als Heizelement ausgeführtes Element erfolgen. Das Element ist mit Elektrizität, d. h. beispielsweise mit einer elektrischen Heizspannung und/oder einer elektrischen Messspannung und/oder einem elektrischen Messstrom, beaufschlagbar.

## Patentansprüche

1. Elektrische Anordnung zur Einbringung in einen eine Flüssigkeit (11), insbesondere ein Reduktionsmittel zur Entstickung von Abgasen einer Brennkraftmaschine, enthaltenden Tank (1), mit mindestens einem über mindestens eine elektrische Leitung (29) mit Elektrizität beaufschlagbaren Element (23, 25; 50; 67) zur Messung beziehungsweise Beeinflussung einer Zustandsgröße der Flüssigkeit, wobei das Element zumindest teilweise mit einer einen Kunststoff aufweisenden Beschichtung (35) bedeckt und zum zumindest teilweisen Eintauchen in die Flüssigkeit (11) eingerichtet ist, **dadurch gekennzeichnet, dass** der Kunststoff ein Elastomer ist.

2. Anordnung nach Anspruch 1, **dadurch gekennzeichnet, dass** das Elastomer ein Kautschuk, insbesondere ein Ethylen-Propylen-Dien-Kautschuk, ist.

3. Anordnung nach Anspruch 1 oder 2, **dadurch gekennzeichnet, dass** sich die Beschichtung zumindest teilweise auf die elektrische Leitung (29) erstreckt.

4. Anordnung nach Anspruch 3, **dadurch gekennzeichnet, dass** die Beschichtung einen Übergangsbereich (37, 39) der Leitung zum Element bedeckt.

5. Anordnung nach Anspruch 4, **dadurch gekennzeichnet, dass** die Beschichtung im Übergangsbereich mit einem Spannelement (41) beaufschlagt ist.

6. Anordnung nach einem der vorhergehenden Ansprüche, **dadurch gekennzeichnet, dass** die Beschichtung durch Umspritzung des Elements und der Leitung hergestellt ist, wobei die Umspritzung von Element und Leitung in einem einzigen Umspritzungsvorgang erfolgt ist.

7. Anordnung nach einem der vorhergehenden Ansprüche, **dadurch gekennzeichnet, dass** das Element ein Metallstift (50) und/oder ein Temperaturmeßwertgeber (67) und/oder ein Heizelement (23, 25) ist.

8. Anordnung nach einem der vorhergehenden Ansprüche, **dadurch gekennzeichnet, dass** das Element mit mindestenes einem elektrischen Schaltungselement (52) verbunden ist, wobei das mindestens eine elektrische Schaltungselement - wahlweise von einer Umhüllung (64) umgeben - von der Beschichtung bedeckt ist.

9. Anordnung nach einem der vorhergehenden Ansprüche, **dadurch gekennzeichnet, dass** ein an der Beschichtung befestigtes Stützelement (62) ein die mindestens eine elektrische Leitung (29) aufweisendes Kabel (60) relativ zum Element (23, 25; 50; 67) fixiert.

10. Verfahren zur Herstellung einer elektrischen Anordnung nach einem der vorhergehenden Ansprüche, **dadurch gekennzeichnet, dass** als Kunststoff für die Beschichtung (35) ein Elastomer verwendet wird.
